# FASCICULE DE BREVET EUROPEEN

(11) **EP 3 373 775 B1**
(45) Date de publication et mention de la délivrance du brevet: **24.04.2019**
(21) Numéro de dépôt: 16809135.3
(22) Date de dépôt: 10.11.2016
(51) Int. Cl.: A47J 27/08, A47J 27/086, A47J 27/62

(54) **PROCÉDÉ DE COMMANDE D'UN APPAREIL DE CUISSON**
VERFAHREN ZUR STEUERUNG EINER KOCHVORRICHTUNG
METHOD FOR CONTROLLING A COOKING APPARATUS

(30) Priorité: 12.11.2015 FR 1560837
(43) Date de publication de la demande: 19.09.2018
(73) Titulaire: SEB S.A., 69130 Ecully (FR)
(72) Inventeur: GOYON, Annabelle, 21120 Marcilly-sur-Tille (FR)
(74) Mandataire: Bourrières, Patrice
(86) Numéro de dépôt international: PCT/FR2016/052923
(87) Numéro de publication internationale: WO 2017/081420

(56) Documents cités:
- FR-A1- 2 966 713

## Description

La présente invention concerne un procédé de commande d'un appareil de cuisson. Le procédé selon l'invention est particulièrement adapté pour la cuisson de graines telles que des céréales par exemple du blé, orge, sarrasin, quinoa, millet, ou des légumineuses par exemple des lentilles, soja, pois chiche, haricot rouge, haricot blanc, flageolet, fèves.

Selon l'art antérieur, le protocole de cuisson traditionnel de certaines légumineuses, notamment soja, haricots et pois chiches, consiste à faire tremper pendant environ 12h certaines légumineuses dans l'eau froide. Les légumineuses sont ensuite rincées puis cuites dans une eau en ébullition pour une durée de 1h30-2h. Ce protocole est identique pour certaines céréales ayant un tégument très résistant comme par exemple le blé et l'orge.

Certaines légumineuses de petites tailles, comme les lentilles ou les pois cassés, peuvent être cuites de manière plus rapide en 30 à 45 min. En effet, leur petite taille permet une réhydratation rapide.

Par ailleurs, le débordement fréquent des cuissons de légumineuses est lié au pouvoir moussant des protéines de légumineuses. Ces propriétés fonctionnelles sont fréquemment exploitées par l'industrie agro-alimentaire. A domicile ces propriétés représentent plus un inconvénient qu'un atout.

Le document FR-A-2 966 713 décrit un appareil de cuisson. Le problème technique que se propose de résoudre l'invention est de réduire le temps de préparation des graines.

Selon l'invention, ce problème technique est résolu par un procédé de commande d'un appareil de cuisson comprenant un boitier fermé par un couvercle, le boitier étant équipé d'un élément chauffant principal, d'une cuve placée dans le boitier, d'un élément chauffant le bord supérieur de la cuve, d'un élément chauffant le couvercle, d'un premier capteur de température situé à proximité du fond de la cuve et d'un deuxième capteur de température placé dans le couvercle, le procédé étant caractérisé en ce qu'il comprend :
- Une étape de trempage comprenant une première phase de décontamination pendant laquelle les éléments chauffants sont commandés pour maintenir une température de consigne de 100°C à l'intérieur de la cuve; et une deuxième phase pendant laquelle les éléments chauffants sont commandés pour maintenir, pendant une durée comprise entre 30min et 50min, une température de consigne comprise entre 60 et 80°C à l'intérieur de la cuve ;
- Une étape de drainage de l'eau de trempage ;
- Une étape de remplissage de la cuve avec une quantité déterminée d'eau ;
- Une étape de chauffage, démarrant à l'issue de la durée déterminée de trempage, pendant laquelle les éléments chauffants sont commandés pour atteindre une température de consigne comprise entre 85°C et 115°C à l'intérieur de la cuve;
- Une étape de cuisson, démarrant dès que la température de consigne est atteinte, pendant laquelle les éléments chauffants sont commandés pour maintenir la température de consigne à l'intérieur de la cuve pendant une durée déterminée comprise entre 45 et 90 min. Le trempage à haute température permet de réduire considérablement le temps de trempage traditionnel sans détériorer les qualités organoleptiques des aliments. Le drainage permet d'éliminer les substances antinutritionnelles.

Selon un autre mode de réalisation, l'étape de drainage et l'étape de remplissage sont réalisées manuellement par l'utilisateur.

Selon un autre mode de réalisation, l'étape de drainage et l'étape de remplissage sont réalisées de façon automatique par l'intermédiaire d'un dispositif de drainage monté dans l'appareil de cuisson et une réserve d'eau claire de l'appareil de cuisson. Ceci permet de réduire le niveau d'intervention de l'utilisateur dans le procédé de préparation des aliments.

Selon, un autre mode de réalisation, la température de consigne de l'étape de chauffage est inférieure à 90°C lorsque des aliments riches en saponines sont placés dans la cuve. En limitant aussi la température de cuisson, le phénomène de moussage est réduit voire supprimé, ce qui limite le débordement lors de la cuisson.

Selon un autre mode de réalisation, une étape d'attente est réalisée entre l'étape de trempage et l'étape de drainage pour laisser baisser la température à l'intérieur de la cuve. Cette même étape d'attente peut être réalisée en fin de cuisson. Ceci permet de limiter l'éclatement de certaines graines lors de la phase de drainage.

D'autres particularités et avantages de la présente invention apparaîtront dans la description ci-après de modes de réalisation donnés à titre d'exemples non limitatifs et illustrés par les dessins mis en annexe dans lesquels :
La figure 1 est une vue schématique d'un appareil de cuisson permettant de mettre en oeuvre le procédé selon l'invention.
La figure 2 représente le diagramme de température en fonction du temps correspondant au procédé de commande selon l'invention.

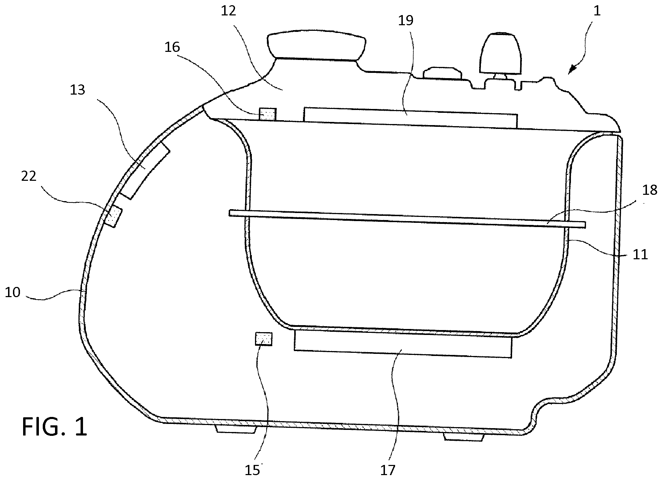

Dans la suite de la description, on désignera par graines des légumineuses ou des céréales comestibles telles que blé, orge, sarrasin, quinoa, millet, lentille, soja, pois chiche, haricot rouge ou un mélange de ces graines. Un appareil de cuisson apte à mettre en oeuvre le procédé selon l'invention va à présent être décrit en référence à la figure 1.

Selon l'invention, l'appareil de cuisson 1 comprend un corps principal 10 ou boîtier comprenant un logement dans lequel est insérée une cuve 11 interne pour cuire les graines. Le boitier est équipé d'un couvercle 12 monté articulé sur le boitier 10 de telle manière que la partie supérieure du corps principal est ouverte ou fermée par le couvercle 12. Un dispositif de commande 13 assurant les opérations de contrôle de l'appareil de cuisson 1 équipe également le boitier 10.

L'appareil de cuisson 1 comprend également un premier capteur 15 pour détecter la température de la partie inférieure de la cuve 11. Le premier capteur 15 est monté à proximité du fond de la cuve. Un second capteur 16 pour détecter la température de la face interne du couvercle 12 est monté sur le couvercle. Les premier et deuxième capteurs sont connectés au dispositif de commande 13.

Les moyens de chauffage de l'appareil de cuisson 1 comprennent un élément chauffant dit principal 17 fournissant une source de chauffage de manière à provoquer l'opération de trempage/cuisson et l'opération de maintien au chaud dans la cuve 11 de l'appareil de cuisson, un élément 18 chauffant le bord supérieur de la cuve 11 et un élément 19 chauffant la face interne du couvercle 12.

Le boitier 10 ainsi que le couvercle sont par exemple en plastique.

Le dispositif de commande 13 est installé sur un côté intérieur du corps principal 10. Le dispositif de commande 13 est également connecté à des boutons de commande 22 permettant à un utilisateur de programmer l'appareil.

Par ailleurs, le dispositif de commande 13 est connecté aux éléments chauffants 17, 18, 19 pour les activer ou les désactiver en fonction d'une part d'un programme de cuisson choisi par l'utilisateur et d'autre part des mesures de température relevées par les deux capteurs 15, 16.

Selon une variante de réalisation, l'élément chauffant principal 17 est de type induction alors que l'élément 18 chauffant le bord supérieur de la cuve 11 et l'élément 19 chauffant le couvercle 12 sont de type résistif.

Le procédé de commande de l'appareil de cuisson 1 selon l'invention permet la cuisson de légumineuses en moins de 3h incluant le temps de trempage indispensable pour obtenir des qualités organoleptiques et nutritionnelles acceptables.

Selon les tests réalisés par la demanderesse, un trempage des graines dans de l'eau chaude (température supérieure à 60°C) permet d'une part de réduire considérablement la durée de trempage totale et d'autre part de décontaminer lesdites graines si la température de trempage est amenée à 100°C.

Ce trempage à chaud permet d'accélérer la réhydratation des graines en provoquant la gélatinisation de l'amidon. La durée de trempage à chaud dépend de l'épaisseur du tégument de la graine à cuire. Cette étape permet la destruction partielle de la cellulose constitutive des parois des graines et permet également la gélatinisation de l'amidon pour une bonne hydratation.

L'étape de trempage a une durée limitée. En effet, une phase de trempage trop longue altère les caractéristiques organoleptiques des graines. Si le trempage se poursuit pendant un temps trop long, le niveau des graines dans la cuve passe au dessus du niveau d'eau, ce qui signifie que les graines situées sur le haut de la cuve sont à l'air libre et se dessèchent rapidement alors que les graines en fond de cuve sont toujours en contact avec l'eau et continuent d'absorber l'eau résiduelle. Lors du passage en phase de cuisson, il se peut qu'il n'y ait plus assez d'eau pour cuire les graines du dessus alors que celles en fond de cuve seront beaucoup plus hydratées. La cuisson sera alors très hétérogène au sein de la cuve. Selon une variante de réalisation du procédé selon l'invention, l'étape de trempage comprend 2 phases. La première phase permet notamment la décontamination des graines et est réalisée à 100°C. La durée de la phase de décontamination dépend de la quantité et du type de graine à cuire. En moyenne, une première phase de trempage de 10min à 100°C permet de détruire toutes les bactéries présentes. La seconde phase de trempage est réalisée à une température comprise entre 60 et 80°C pendant une durée comprise entre 30min et 50min. La durée de cette étape dépend notamment de l'épaisseur du tégument de la graine à cuire et également de la quantité de graines.

Le procédé selon l'invention comprend également une étape de drainage à l'issue de la phase de trempage. Au cours du trempage, certains composés antinutritionnels de nature protéique ou non protéique sont thermosensibles et seront donc éliminés lors de la cuisson. D'autres composés antinutritionnels sont solubles dans l'eau de trempage et pourront donc être éliminés grâce à l'étape de drainage réalisée dans le procédé selon l'invention. La plupart des facteurs antinutritionnels alimentaires ont un impact sur le système digestif, comme l'inhibition des enzymes digestifs (inhibiteurs de la protéase, par exemple), l'altération des fonctions d'hydrolyse, la formation de complexes insolubles qui ne peuvent être adsorbés, la diminution de la biodisponibilité de certains nutriments (phytates, polyphénols), et l'augmentation de la production de gaz dans le côlon (a-galactosides).

L'acide phytique, myo-inositol-1,2,3,4,5, 6,-hexakis (dihydrogen-phosphate), est soluble et est l'un des facteurs antinutritionnels les plus répandus dans les légumineuses. Aux valeurs de pH rencontrées dans les aliments et dans le tractus gastro-intestinal, l'acide phytique sera fortement chargé négativement et peut se lier à des espèces chargées positivement, telles que des cations ou les protéines. Plusieurs études ont démontré une diminution de la dégradation enzymatique des protéines en présence d'acide phytique. Cette diminution est liée à l'inhibition des enzymes digestifs tels que la protéase, la trypsine et la pepsine. D'autres chercheurs ont utilisé la solubilité de l'azote en tant que critère d'évaluation de la digestibilité et ont montré que, pendant l'hydrolyse des protéines, l'acide phytique forme des complexes peptide-phytate insolubles, ce qui réduit la production d'azote soluble et donc diminue le taux d'hydrolyse.

D'autres études ont montré que la molécule de phytate est chargée négativement au pH physiologique et peut se lier avec des cations importants sur le plan nutritionnel comme les cations essentiels divalents Fe²⁺, Zn²⁺, Mg²⁺ et Ca²⁺, etc., et former des complexes insolubles, ce qui rend les minéraux indisponibles pour l'absorption. L'acide phytique forme également des complexes avec l'amidon et empêche sa digestion.

En fin de trempage, avant la montée en température amorçant la cuisson, l'eau de trempage résiduelle est drainée, ce qui élimine les facteurs antinutritionnels solubles. Par la suite, de l'eau claire est ajoutée pour la phase de cuisson. Le drainage peut être réalisé manuellement, à l'aide d'un égouttoir ou d'une passoire par exemple, et l'utilisateur de l'appareil ajoute ensuite de l'eau claire pour réaliser la cuisson.

Selon une autre variante de réalisation, l'appareil comprend un dispositif de drainage qui permet d'éliminer l'eau de trempage et de collecter l'amidon soluble, ainsi qu'un réservoir d'eau claire qui réalimente la cuve de cuisson pour la phase de cuisson.

Le dispositif de drainage (non représenté) comprend par exemple un orifice pratique dans le fond de la cuve 11. L'orifice est obturé par une valve pilotée par le dispositif de commande 13. Un récipient est placé sous la cuve 11 afin de récolter le liquide de drainage qui s'écoule par l'orifice lorsque la valve est en position ouverte. Un filtre mécanique peut être placé au niveau de l'orifice pour empêcher les graines d'être évacuées avec le liquide.

Afin de réalimenter la cuve 11 interne en eau, la réserve d'eau claire (non représentée) est par exemple positionnée au-dessus de la cuve 11 interne. Un orifice de vidage et une valve pilotée par le dispositif de commande sont réalisés dans le fond de la réserve d'eau claire.

Selon une autre variante de réalisation, la réserve d'eau claire peut être installée autour de la cuve 11 interne. Afin d'amener l'eau claire jusque dans la cuve 11 interne, une pompe d'aspiration et un conduit sont associés à la réserve d'eau claire de sorte que la pompe aspire l'eau claire de la réserve et la pousse jusque dans la cuve via le conduit.

Selon une autre variante de réalisation, l'eau claire est fournie par une source externe par exemple le réseau domestique de distribution d'eau. Selon cette variante, l'appareil de cuisson selon l'invention comprend un connecteur extérieur relié à un conduit. L'extrémité libre du conduit est placée dans la cuve 11 interne.

Une valve pilotée est installée sur le conduit. Avant le démarrage d'un cycle de cuisson, l'utilisateur branche le réseau domestique sur le connecteur.

Pour les différentes variantes décrites ci-dessus, le drainage et le remplissage sont réalisés de façon automatique par actionnement des différentes valves pilotées par le dispositif de commande.

Le procédé de commande comprend, à l'issue de l'étape de drainage, une étape de cuisson. Les paramètres de cuisson (température et durée) sont déterminés en fonction du type de graines à cuire.

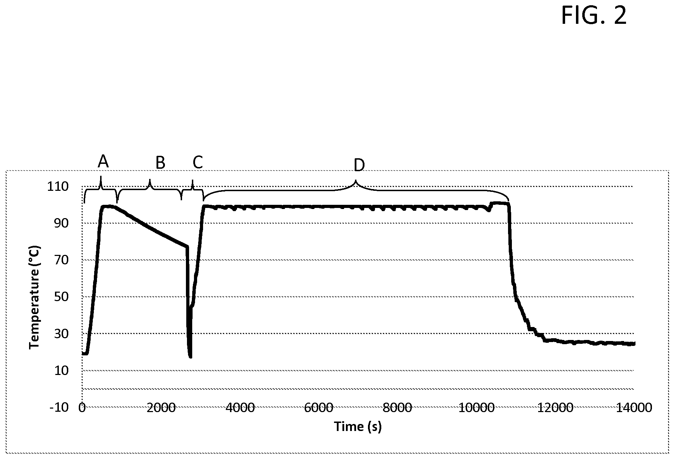

La figure 2 représente le diagramme de température en fonction du temps lors de la mise en oeuvre d'une étape de trempage du procédé selon l'invention.

Le procédé de commande selon l'invention permet de réaliser le trempage et la cuisson des graines dans l'appareil de cuisson sans intervention de l'utilisateur au cours du cycle de préparation.

Pour la préparation de graines, l'utilisateur introduit dans la cuve de l'appareil de cuisson une quantité déterminée de graines et d'eau. Ces quantités sont par exemple indiquées par des niveaux identifiés sur la surface intérieure de la cuve.

L'étape principale du procédé de commande selon l'invention est une étape de trempage. Cette étape de trempage comprend 2 phases A, B. Dans la première phase A, tout ou partie des éléments chauffants 17, 18, 19 sont activés de façon à maintenir une température à l'intérieur de la cuve 11 voisine de 100°C. En d'autres termes, une boucle de régulation des éléments chauffants 17, 18, 19 sur le signal du premier capteur 15 de température situé dans le fond de la cuve 11 est mise en oeuvre. La durée moyenne de la première phase de trempage est limitée à 10 min avec une durée minimale de 2 min environ. Selon une autre variante de réalisation, l'élément chauffant 19 placé dans le couvercle est désactivé durant toute l'étape de trempage.

Dans une deuxième phase B de l'étape de trempage, la température de consigne est modifiée pour être abaissée à une valeur comprise entre 60°C et 80°C. La durée de la deuxième phase B de l'étape de trempage est comprise entre 30 et 50 min en fonction du type de graines à cuire.

A l'issue de l'étape de trempage, c'est-à-dire après que la durée de trempage choisie par l'utilisateur soit écoulée, une étape de drainage est déclenchée. Comme indiqué précédemment, cette étape consiste à retirer/drainer l'eau de trempage grâce au dispositif de drainage et à ajouter la quantité d'eau claire nécessaire pour la cuisson des graines proprement dite.

Lors de la cuisson de graines possédant un tégument épais, un temps de pause est opéré avant l'ouverture de l'appareil de cuisson afin de laisser refroidir la préparation. En effet, la demanderesse a constaté qu'un refroidissement trop rapide des graines de ce type pouvait faire éclater les graines.

Lorsque la quantité d'eau claire est ajoutée, l'étape de chauffage C est enclenchée automatiquement. L'étape de chauffage consiste à atteindre une température de consigne déterminée comprise entre 85 et 115°C à l'intérieur de la cuve 11. Pour ce faire, le dispositif de commande 13 active tous les éléments chauffants 17, 18, 19 de l'appareil de cuisson 1 tant que le signal du deuxième capteur 16 situé dans le couvercle 12 n'indique pas la température de consigne.

Selon une variante de réalisation, une pause dans le déroulement des étapes peut être introduite avant le démarrage de l'étape de chauffage. Cette étape permet à l'utilisateur d'ajouter des ingrédients à la préparation et notamment d'autres graines qui ne nécessiteraient pas de trempage. Pendant cette étape de chauffage, on maintient une vitesse de montée en température comprise entre 3 et 7°C/min.

Selon un mode préféré de l'invention, lorsque que les graines à cuire seront riches en saponines, la température de consigne sera inférieure à 100°C et préférentiellement de l'ordre de 90°C. En choisissant une température de cuisson inférieure à100°C, on évite tout débordement.

Une fois la température de consigne atteinte, l'étape de cuisson D débute. Selon l'invention, la température de consigne de l'étape de cuisson est maintenue pendant une durée comprise entre 45min et 90min. La durée de cuisson dépend du type de graines à cuire. A titre d'exemple, les temps de cuisson pour les différentes graines sont les suivants :
Pois chiches : 90 min
Haricots : 120 min
Blé : 90min
Orge : 50min

L'invention n'est pas limitée aux exemples de réalisation décrits.

## Revendications

1. Procédé de commande d'un appareil de cuisson (1) comprenant un boitier (10) fermé par un couvercle (12), le boitier (10) étant équipé d'un élément chauffant (17) principal, d'une cuve (11) placée dans le boitier (10), d'un élément (18) chauffant le bord supérieur de la cuve (11), d'un élément (19) chauffant le couvercle (12), d'un premier capteur (15) de température situé à proximité du fond de la cuve (11) et d'un deuxième capteur (16) de température placé dans le couvercle (12), le procédé étant **caractérisé en ce qu'**il comprend :
- Une étape de trempage comprend une première phase (A) de décontamination pendant laquelle les éléments chauffants (17, 18, 19) sont commandés pour maintenir une température de consigne de 100°C à l'intérieur de la cuve (11) ; et une deuxième phase (B) pendant laquelle les éléments chauffants (17, 18, 19) sont commandés pour maintenir, pendant une durée comprise entre 30min et 50min, une température de consigne comprise entre 60 et 80°C à l'intérieur de la cuve (11) ;
- Une étape de drainage de l'eau de trempage ;
- Une étape de remplissage de la cuve avec une quantité déterminée d'eau ;
- Une étape de chauffage (C), démarrant à l'issue de la durée déterminée de trempage, pendant laquelle les éléments chauffants (17, 18, 19) sont commandés pour atteindre une température de consigne comprise entre 85°C et 115°C à l'intérieur de la cuve (11) ;
- Une étape de cuisson (D), démarrant dès que la température de consigne est atteinte, pendant laquelle les éléments chauffants (17, 18, 19) sont commandés pour maintenir la température de consigne à l'intérieur de la cuve (11) pendant une durée déterminée comprise entre 45 et 90 min.

2. Procédé de commande d'un appareil de cuisson selon la revendication 1, **caractérisé en ce que** l'étape de drainage et l'étape de remplissage sont réalisées manuellement par l'utilisateur.

3. Procédé de commande d'un appareil de cuisson selon la revendication 1, **caractérisé en ce que** l'étape de drainage et l'étape de remplissage sont réalisées de façon automatique par l'intermédiaire d'un dispositif de drainage monté dans l'appareil de cuisson et une réserve d'eau claire de l'appareil de cuisson.

4. Procédé de commande d'un appareil de cuisson selon l'une des revendications 1 à 3, **caractérisé en ce que** la température de consigne de l'étape de chauffage est inférieur a 90°C lorsque des aliments riches en saponines sont placés dans la cuve (11).

5. Procédé de commande d'un appareil de cuisson selon la revendication 4, **caractérisé en ce qu'**une étape d'attente est réalisée après entre l'étape de trempage et l'étape de drainage pour laisser baisser la température à l'intérieur de la cuve (11) et en fin de cuisson.

## Patentansprüche

1. Verfahren zur Steuerung eines Kochgeräts (1), das ein durch einen Deckel (12) geschlossenes Gehäuse (10) umfasst, wobei das Gehäuse (10) mit einem vorrangigem Element zum Heizen (17), einem Tank (11), der in dem Gehäuse (10) platziert ist, einem Element (18) zum Heizen des oberen Rands des Tanks (11), einem Element (19) zum Heizen des Deckels (12), einem ersten Temperatursensor (15), der sich in der Nähe des Bodens des Tanks (11) befindet, und einem zweiten Temperatursensor (16), der in dem Deckel (12) platziert ist, ausgestattet ist, wobei das Verfahren **dadurch gekennzeichnet ist, dass** es umfasst:
- einen Schritt zur Wässerung, der eine erste Phase (A) der Dekontaminierung, während der die Elemente zum Heizen (17, 18, 19) gesteuert werden, um eine Solltemperatur von 100 °C im Inneren des Tanks (11) beizubehalten, und eine zweite Phase (B) umfasst, während der die Elemente zum Heizen (17, 18, 19) gesteuert werden, um während einer Dauer zwischen 30 Minuten und 50 Minuten eine Solltemperatur zwischen 60 und 80 °C im Inneren des Tanks (11) beizubehalten;
- einen Schritt zur Entwässerung des Wassers zur Wässerung;
- einen Schritt zur Befüllung des Tanks mit einer bestimmten Wassermenge;
- einen Erwärmungsschritt (C), der am Ende der bestimmten Wässerungsdauer beginnt, während der die Elemente zum Heizen (17, 18, 19) gesteuert werden, um eine Solltemperatur zwischen 85 °C und 115 °C in dem Inneren des Tanks (11) zu erreichen;
- einen Kochschritt (D), der beginnt, sobald die Solltemperatur erreicht ist, während der die Elemente zum Heizen (17, 18, 19) gesteuert werden, um die Solltemperatur in dem Inneren des Tanks (11) für eine bestimmte Zeitdauer zwischen 45 und 90 min beizubehalten.

2. Verfahren zur Steuerung eines Kochgeräts nach Anspruch 1, **dadurch gekennzeichnet, dass** der Schritt zur Entwässerung und der Schritt zur Befüllung manuell von dem Benutzer ausgeführt werden.

3. Verfahren zur Steuerung eines Kochgeräts nach Anspruch 1, **dadurch gekennzeichnet, dass** der Schritt zur Entwässerung und der Schritt zur Befüllung automatisch mittels einer in dem Kochgerät angebrachten Entwässerungsvorrichtung und eines Vorrats von klarem Wasser des Kochgeräts durchgeführt werden.

4. Verfahren zur Steuerung eines Kochgeräts nach einem der Ansprüche 1 bis 3, **dadurch gekennzeichnet, dass** die Solltemperatur des Erwärmungsschrittes weniger als 90 °C beträgt, während saponinreiche Nahrungsmittel in dem Tank (11) platziert sind.

5. Verfahren zur Steuerung eines Kochgeräts nach Anspruch 4, **dadurch gekennzeichnet, dass** ein Warteschritt nach dem Schritt zur Wässerung und dem Schritt zur Entwässerung ausgeführt wird, um die Temperatur im Inneren des Tanks (11) und am Ende des Kochens sinken zu lassen.

## Claims

1. Method for controlling a cooking apparatus (1) comprising a housing (10) closed by a lid (12), the housing (10) being equipped with a main heating element (17), a vessel (11) placed in the housing (10), an element (18) heating the upper edge of the vessel (11), an element (19) heating the lid (12), a first temperature sensor (15) located near the bottom of the vessel (11) and a second temperature sensor (16) placed in the lid (12), the method being **characterised in that** it comprises:
- a soaking step comprising a first phase (A) of decontamination during which the heating elements (17, 18, 19) are controlled to maintain a set temperature of 100°C inside the vessel (11); and a second phase (B) during which the heating elements (17, 18, 19) are controlled to maintain, for a period between 30 minutes and 50 minutes, a set temperature of between 60 and 80°C inside the vessel (11);
- a step of draining the soaking water;
- a step of filling the vessel with a determined amount of water;
- a heating step (C), starting at the end of the determined soaking time, during which the heating elements (17, 18, 19) are controlled to reach a set temperature between 85°C and 115°C inside the vessel (11);
- a cooking step (D), starting as soon as the set temperature has been reached, during which the heating elements (17, 18, 19) are controlled to maintain the set temperature inside the vessel (11) during a determined period of between 45 and 90 minutes.

2. Method for controlling a cooking apparatus according to claim 1, **characterised in that** the draining step and the filling step are carried out manually by the user.

3. Method for controlling a cooking apparatus according to claim 1, **characterised in that** the draining step and the filling step are carried out automatically by means of a draining device mounted in the cooking apparatus and a reserve of clear water of the cooking apparatus.

4. Method for controlling a cooking apparatus according to any of claims 1 to 3, **characterised in that** the set temperature of the heating step is less than 90°C when saponin-rich foods are placed in the vessel (11).

5. Method for controlling a cooking apparatus according to claim 4, **characterised in that** a waiting step is included after the soaking step and the draining step to let the temperature decrease inside the vessel (11) and at the end of cooking.
